# EUROPÄISCHE PATENTSCHRIFT

(11) **EP 1 609 708 B1**
(45) Veröffentlichungstag und Bekanntmachung des Hinweises auf die Patenterteilung: **25.07.2007**
(21) Anmeldenummer: 04014695.3
(22) Anmeldetag: 23.06.2004
(51) Int. Cl.: B62H 3/12

(54) **Fahrradparkieranlage**
Device for parking bicycles
Dispositif pour garer des bicyclettes

(43) Veröffentlichungstag der Anmeldung: 28.12.2005
(73) Patentinhaber: Marco Tschümperlin, 6005 Luzern (CH)
(72) Erfinder: Tschümperlin, Marco, 6005 Luzern (CH)
(74) Vertreter: Troesch Scheidegger Werner AG

(56) Entgegenhaltungen:
- EP-A- 1 162 131
- US-A- 6 164 459
- US-B1- 6 237 781

## Beschreibung

Die vorliegende Erfindung betrifft eine Fahrradparkieranlage gemäß dem Oberbegriff des Anspruchs 1, wie sie beispielsweise von der US-A-6,164,459 gezeigt wird.

Es sind Fahrradparkieranlagen der vorgenannten Art allgemein im Einsatz, bei denen die Fahrräder in Parkeinheiten gestellt und diese dann mittels einem ausgeklügelten Mechanik-Federsystem jeweils ein Fahrrad in eine gewünschte Parkstellung anheben. Der Platzbedarf solcher Anlagen ist oft beträchtlich, die Störungsanfälligkeit wegen der relativen Komplexität nicht vernachlässigbar und sie verlangen zudem oft einen verbleibenden Krafteinsatz, der nicht allen potentiellen Benutzern zumutbar ist.

Grundsätzlich würde ja die Möglichkeit bestehen, jede einzelne Parkeinheit als Aufzug auszubilden, was allerdings einen kostspieligen Aufwand und Platzprobleme mit sich bringen würde. Eine solche Lösung ist für Fahrräder somit nicht geeignet.

Aufgabe der vorliegenden Erfindung war es, eine Fahrradparkieranlage vorzuschlagen, welche bei vertretbarem Aufwand das Aufstellen einer grösseren Anzahl von Parkeinheiten erlaubt, mit denen ohne jeglichen Kraftaufwand durch den Benutzer Fahrräder nahezu vertikal, d.h. optimal Platz sparend parkiert werden können, wobei zudem der Zugang zu den einzelnen Parkeinheiten, auch praktisch gleichzeitig, gewährleistet sein soll.

Diese Aufgabe wird bei einer Fahrradparkieranlage der eingangs definierten Art auf überraschend einfache Weise durch die konstruktiven Merkmale gemäss dem kennzeichnenden Teil von Anspruch 1 gelöst.

Dank der gemeinsamen, durch einen einzigen Motor angetriebenen Verbindungswelle lassen sich die individuellen Parkeinheiten unabhängig voneinander jederzeit an den Antrieb ankuppeln und ein Absenken von aufgezogenen Fahrrädern ist unabhängig vom Bewegungszustand bzw. der Stellung andere Parkeinheiten möglich.

Besonders vorteilhafte Ausführungsformen der Erfindung sind in den abhängigen Ansprüchen definiert.

Die erfindungsgemässe Anlage eignet sich insbesondere zur Erstellung eines modular aufgebauten Fahrradparkier-Systems.

Die einzelnen Parkeinheiten können ohne grossen Aufwand beliebig erweitert und an die spezifischen örtlichen Gegebenheiten angepasst werden. Die Anlage kann einreihig als Einzelanlage oder doppelreihig angeordnet werden (mit einer oder zwei Antriebswellen) und sowohl im Freien als auch in einem Gebäude aufgebaut werden.

Die Bedienung der Anlage ist einfach. Alle Parkeinheiten können gleichzeitig benutzt werden, so dass keine Wartezeiten entstehen. Nach dem Einstellen eines Fahrrades in die Führungen einer Parkeinheit und dem Betätigen von Antrieb (falls dieser nicht bereits eingeschaltet ist) und Aufzug wird ein Fahrrad bis in die Parkstellung aufgezogen, wo der Aufzug automatisch stoppt und damit den Parkvorgang abschliesst. Zum Zurückholen (Absenken) des Fahrrades ist individuell lediglich die Bremseinrichtung zu betätigen.

Die Erfindung wird nachstehend anhand eines in der Zeichnung dargestellten Ausführungsbeispiels noch etwas näher erläutert.

Es zeigt:
- Fig. 1: rein schematisch eine Parkeinheit für eine erfindungsgemässe Anlage;
- Fig. 2: eine Fahrradparkieranlage nach der Erfindung schematisch von der Seite;
- Fig. 3: die Anlage nach Fig. 2 von oben;
- Fig. 4: eine Kupplungs-Bremseinrichtung zum Aufsetzen auf eine gemeinsame Verbindungswelle, und
- Fig. 5: die Einrichtung nach Fig. 4 in auseinander gezogener Darstellung.

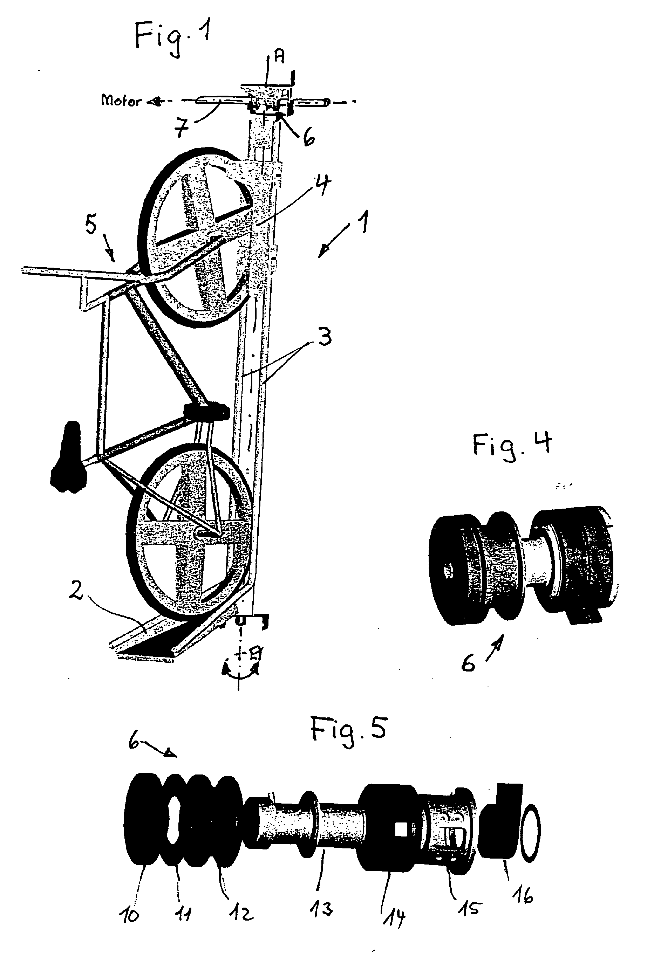

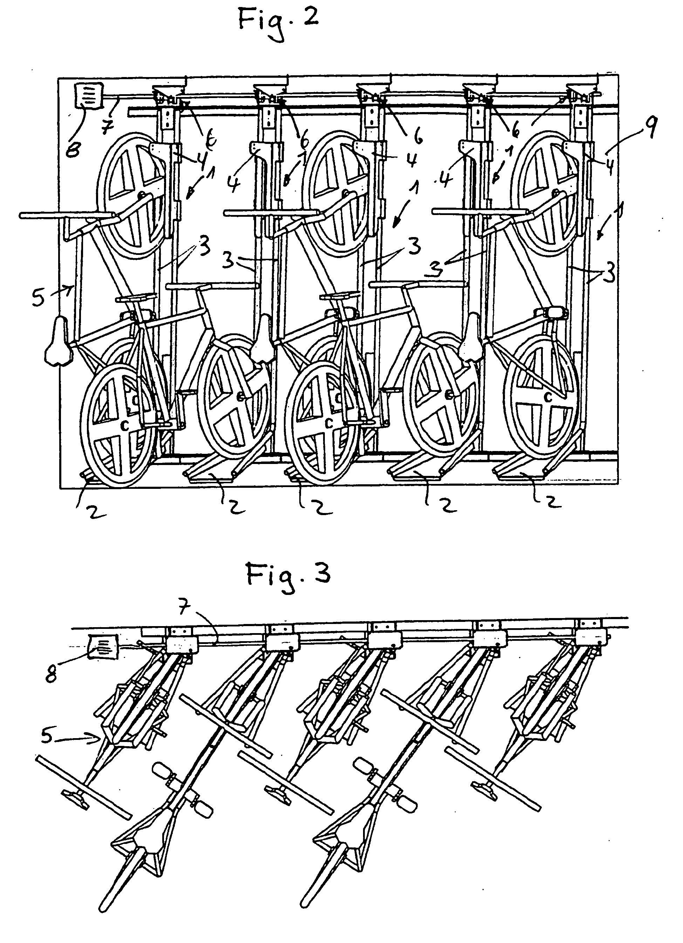

Figur 1 der Zeichnung zeigt eine Parkeinheit 1, welche in grösserer Zahl nebeneinander angeordnete, eine Fahrradparkieranlage gemäss der Erfindung bildet.

Jede Parkeinheit 1 weist eine Aufsetzplatte 2 mit anschliessender, nach oben gerichteter Führung 3 (Gestell) auf, entlang welcher eine Aufzugvorrichtung 4 verfahrbar ist, um ein Fahrrad 5 in eine im Wesentlichen vertikale Parkstellung aufzuziehen (nachdem ein Fahrrad in horizontaler Normalstellung mit dem Vorderrad in eine Haltevorrichtung auf der Aufsetzplatte 2 gestellt wurde und von der Aufzugvorrichtung 4, in der untersten Stellung, erfasst wurde). Die Aufzugvorrichtung 4 wird mittels einer am oberen Ende der Führung 3 angeordneten Kupplungs-Bremseinrichtung 6, z.B. mittels Ketten- oder Seilzug (nicht dargestellt) nach oben gezogen. Durch die Kupplungs-Bremseinrichtung 6 führt eine allen Parkeinheiten 1 der Anlage gemeinsame Antriebs- bzw. Verbindungswelle 7, welche von einem einzigen Elektromotor 8 (s. Figur 2) antreibbar ist.

Die Kupplungs-Bremseinrichtung 6 jeder Einheit 1 ist für jede Parkeinheit individuell betätigbar, indem sie an die Antriebswelle 7 angekuppelt wird, um die zugehörige Aufzugvorrichtung 4 und damit ein Fahrrad 5 in die Parkstellung anzuheben. Die Kupplung ist so ausgebildet, dass bei Erreichen der Parkstellung die zugehörige Aufzugvorrichtung 4 selbsttätig von der antreibenden Welle 7 entkuppelt wird (auch bei weiterlaufender Antriebswelle 7). Die Bremsvorrichtung arbeitet dabei mit der Kupplungsvorrichtung zusammen. Die Bremsvorrichtung jeder Parkeinheit 1 lässt sich individuell lösen, damit die Aufzugvorrichtung 4 und damit ein Fahrrad 5 aus der Parkstellung in die horizontale Normalstellung (dosiert) abgesenkt werden kann.

Die Betätigung des Antriebes bzw. der Antriebswelle 7 (diese wird z.B. über ein Zeitrelais jeweils während einer auswählbaren Zeitspanne ohne Unterbruch angetrieben), der Kupplung (Teil der Vorrichtung 6) und der Bremse (ebenfalls Teil der Vorrichtung 6) erfolgt über elektrische Schalter und/oder eine Hebel- und/oder Pedalmechanik (nicht dargestellt).

Figuren 2 und 3 zeigen eine vor einer Wand 9 oder an einem Rahmen (Gestell) montierte Fahrradparkieranlage nach der Erfindung, bestehend aus einer beliebigen Zahl von einzelnen Parkeinheiten 1, welche über eine gemeinsame Antriebswelle 7 von einem einzelnen Motor 8 angetrieben wird (je nach Grösse der Anlage ist ein passender Motor 8 zu wählen). Je nach Abstand zwischen den einzelnen Parkeinheiten und um einen einwandfreien Betriebsablauf zu gewährleisten, können abwechslungsweise Fahrräder in die Parkstellung aufgezogen werden oder in der horizontalen Normalstellung (in der Führung bzw. der Aufzugvorrichtung gehalten) geparkt werden.

Um die Fahrräder in einem beliebigen idealen Winkel zur Wand zu parkieren, sind die Parkeinheiten 1 mit Aufsetzplatte 2, Haltevorrichtung, nach oben gerichteter Führung 3 und Aufzugvorrichtung 4 um die Längsachse A-A der Führung 4 schwenkbar (und arretierbar).

Figur 4 zeigt eine bei jeder Parkeinheit 1 eingesetzte Ausführung einer Kupplungs-Bremseinrichtung 6, wobei sie in Figur 5 in auseinander gezogener Darstellung gezeigt ist. Die Bestandteile sind: Antriebsteil 10, Kupplungsring 11, Druckstück 12, welche zusammen die Kupplung bilden, die Antriebstrommel 13 für die Kette oder das Seil der Aufzugvorrichtung 4, sowie Schaltring 14, Festteil 15 und Bandbremse, welche zusammen die Bremse bilden.

## Patentansprüche

1. Fahrradparkieranlage mit einer Mehrzahl von jeweils zur Aufnahme eines Fahrrades ausgebildeten Parkeinheiten, welche dazu vorgesehen sind jeweils ein Fahrrad entlang einer Führung aus einer im Wesentlichen horizontalen Normalstellung in eine im Wesentlichen vertikale Parkstellung aufzuziehen, wobei jede Parkeinheit mit einer individuellen Aufzugvorrichtung und einer damit zusammenwirkenden Kupplungs-Bremseinrichtung versehen ist, **dadurch gekennzeichnet, dass** für mehrere Parkeinheiten der Anlage eine gemeinsame motorisch angetriebene Verbindungswelle vorgesehen ist, und dass Mittel vorgesehen sind, um die Aufzugvorrichtung jeder Parkeinheit individuell an die gemeinsame Verbindungswelle anzukuppeln um die Aufzugvorrichtung und damit ein Fahrrad in die Parkstellung anzuheben, sowie Mittel, um die Bremse jeder Parkeinheit individuell zu lösen, um die Aufzugsvorrichtung und damit ein Fahrrad aus der Parkstellung in die Normalstellung abzusenken, wobei bei Erreichen der Parkstellung jede Aufzugvorrichtung selbsttätig von der antreibenden Verbindungswellen entkuppelt wird und durch die Bremse bis zu deren Lösen die Aufzugvorrichtung in der Parkstellung hält.

2. Fahrradparkieranlage nach Anspruch 1, **dadurch gekennzeichnet, dass** die Parkeinheiten der Anlage nebeneinander an einer vertikalen Wand angeordnet sind.

3. Fahrradparkieranlage nach Anspruch 1, **dadurch gekennzeichnet, dass** die Parkeinheiten der Anlage an einem Rahmen angeordnet sind.

4. Fahrradparkieranlage nach Anspruch 1, **dadurch gekennzeichnet, dass** der Antrieb der Verbindungswelle über einen Elektromotor erfolgt.

5. Fahrradparkieranlage nach einem der Ansprüche 1 bis 4, **dadurch gekennzeichnet, dass** die mit der Aufzugvorrichtung zusammenwirkende Kupplungseinrichtung als Sicherheitskupplung ausgebildet ist, welche zur Übertragung eines vorbestimmten maximalen Drehmomentes eingestellt ist.

6. Fahrradparkieranlage nach einem der Ansprüche 1 bis 5, **dadurch gekennzeichnet, dass** die Bremseinrichtung zur Einstellung einer geregelten Absenkgeschwindigkeit dosierbar ist.

7. Fahrradparkieranlage nach einem der Ansprüche 1 bis 6, **dadurch gekennzeichnet, dass** zum Einschalten des Antriebes der Verbindungswelle bzw. zur individuellen Betätigung der Kupplungs- und Bremseinrichtung eine Hebel- und/oder Pedalmechanik oder elektromechanische Einrichtungen vorgesehen sind.

8. Fahrradparkieranlage nach einem der Ansprüche 1 bis 7, **dadurch gekennzeichnet, dass** die Führungen zur Aufnahme der Fahrräder der einzelnen Parkeinheiten die Aufnahme der Fahrräder in einen beliebigen Winkel zu einer durch die Verbindungswelle führenden Vertikalebene anbringbar sind.

9. Fahrradparkieranlage nach einem der Ansprüche 1 bis 8, **dadurch gekennzeichnet, dass** die Aufsetzplatte mit Haltevorrichtung, nach oben gerichteter Führung mit daran verfahrbarer Aufzugvorrichtung der Parkeinheit um die Längsachse der Führung als Einheit verschwenkbar und in einer gewünschten Position arretierbar ist.

## Claims

1. Installation for parking bicycles, with a plurality of parking units each designed for taking up one bicycle and provided for raising up a bicycle along a guide from a substantially horizontal normal position into a substantially vertical parking position, whereby each parking unit is provided with individual elevator means and a coupling-braking device cooperating therewith, **characterized in that** for a plurality of parking units of the installation there is provided a common motor driven driving shaft as well as means for coupling the elevator means of each parking unit individually to said common driving shaft to thereby raise said elevator means and thus a bicycle into the parking position and further **in that** means are provided for releasing individually the braking device of each parking unit to thereby lower said elevator means an thus a bicycle from the parking position into said normal position, whereby upon reaching the parking position each elevator means in automatically disengaged from the driving shaft, said elevator means being retained in the parking position by said braking device until its releasing.

2. Installation for parking bicycles as claimed in claim 1, **characterized in that** the parking units of the installation are arranged side by side on a vertical wall.

3. Installation for parking bicycles as claimed in claim 1, **characterized in that** the parking units of the installation are arranged in a framework.

4. Installation for parking bicycles as claimed in claim 1, **characterized in that** said driving shaft is driven by an electric motor.

5. Installation for parking bicycles as claimed in any of claims 1 to 4, **characterized in that** said coupling device cooperating with said elevator means is designed as a safety coupling adjusted for transmitting a predetermined maximum torque.

6. Installation for parking bicycles as claimed in any of claims 1 to 5, **characterized in that** braking device can be set for providing a controlled lowering speed.

7. Installation for parking bicycles as claimed in any of claims 1 to 6, **characterized by** a lever and/or pedal mechanism or electro-mechanical devices for actuating the drive of the driving shaft or for individually actuating the coupling and braking device.

8. Installation for parking bicycles as claimed in any of claims 1 to 7, **characterized in that** said guides for receiving the bicycles of the individual parking units can be arranged at any desired angle with respect to a vertical plane passing through said driving shaft.

9. Installation for parking bicycles as claimed in any of claims 1 to 8, **characterized in that** the supporting plate with holding device and with upwardly directed guide and elevator means running along such guide of the parking unit is pivot able as a unit around the longitudinal axis of said guide and is lockable in any desired position.

## Revendications

1. Installation pour garer des bicyclettes, avec plusieurs unités de parking chacune configurée pour recevoir une bicyclette et prévue pour lever une bicyclette le long d'un élément de guidage à partir d'une position normale pratiquement horizontale dans une position parc pratiquement verticale, chaque unité de parking comprenant un dispositif élévateur individuel et un dispositif d'accouplement et de freinage coopérant avec le dispositif élévateur, **caractérisée ce qu'**il est prévu pour plusieurs unités de parking de l'installation un arbre de transmission commun entrainé par moteur et par des moyens pour accoupler individuellement le dispositif élévateur de chaque unité de parking à l'arbre de transmission commun pour élever le dispositif élévateur et ainsi une bicyclette dans la position parc ainsi que par des moyens pour desserres individuellement le frein de chaque unité de parking pour ainsi abaisser le dispositif élévateur et ainsi une bicyclette de la position parc dans la position normale, chaque dispositif élévateur, en atteignant la position parc, étant automatiquement découplé de l'arbre de transmission entraîné par moteur , le dispositif élévateur étant retenu dans la position parc par le frein jusqu'au moment de son desserrement.

2. Installation pour garer des bicyclettes selon la revendication 1, **caractérisée en ce que** les unités de parking de l'installation sont disposées l'une à côte de l'autre contre une paroi verticale.

3. Installation pour garer des bicyclettes selon la revendication 1, **caractérisée en ce que** les unités de parking de l'installation sont arrangées sur un cadre.

4. Installation pour garer des bicyclettes selon la revendication 1, **caractérisée en ce que** l'arbre de transmission est entraîné pour un moteur électrique.

5. Installation pour garer des bicyclettes selon l'une des revendications 1 à 4, **caractérisée en ce que** le dispositif d'accouplement coopérant avec le dispositif élévateur est conçu comme un accouplement de sécurité réglé pour la transmission d'un couple prédéterminé maximum.

6. Installation pour garer des bicyclettes selon l'une des revendications 1 à 5, **caractérisée en ce que** le dispositif de freinage peut être dosé pour ajuster une vitesse d'abaissement réglé.

7. Installation pour garer des bicyclettes selon l'une des revendications 1 à 6, **caractérisée par** un mécanisme à leviers et/ou pédales ou par des dispositifs électromécaniques pour mettre en marche l'entraînement de l'arbre de transmission ou pour la mise action individuelle du dispositif d'accouplement et de freinage.

8. Installation pour garer des bicyclettes selon l'une des revendications 1 à 7, **caractérisée en ce que** les éléments de guidage pour recevoir les bicyclettes des unités de parking individuels peuvent être montés sous un angle quelconque par rapport à un plan vertical passent par l'arbre de transmission.

9. Installation pour garer des bicyclettes selon l'une des revendications 1 à 8, **caractérisée en ce que** la plaque d'appui avec un mécanisme de retenu et un élément de guidage dirigé vers le haut et muni d'un dispositif élévateur de l'unité de parking est pivotable comme unité autour de l'axe longitudinal de l'élément de guidage et peut être bloquée dans toute position désirée.
